# EUROPÄISCHE PATENTANMELDUNG

(11) **EP 0 567 109 A1**
(43) Veröffentlichungstag der Anmeldung: **27.10.1993**
(21) Anmeldenummer: 93106533.8
(22) Anmeldetag: 22.04.1993
(51) Int. Cl.: C09J 7/02, B32B 5/24

(54) **Selbstklebendes Band, insbesondere Dichtungs- und Fugenband**

(30) Priorität: 24.04.1992 DE 9205611 U
(71) Anmelder: Silu Verwaltung AG, CH-6030 Ebikon (CH)
(72) Erfinder: Sieber, Marco, CH-6026 Rain (CH); Sieber, Reto, CH-6030 Ebikon (CH)
(74) Vertreter: Blum, Rudolf Emil Ernst

(57) **Zusammenfassung**

Das Klebeband weist einen Schichtaufbau auf. Eine Schicht reisst dabei entlang einer bevorzugten Richtung, z.B. entlang eines Kettfadens (8) im Falle einer Gewebeschicht. Dies erlaubt das definierte, kantenparallele Abreissen des Klebebandes, wodurch Zuschneidearbeit eingespart wird und die Verletzung von unter dem Band liegender Oberflächen durch das Zuschneiden vermieden wird.

## Beschreibung

Die Erfindung betrifft ein Klebeband.

Solche Bänder finden für mannigfaltige Zwecke Anwendung, insbesondere auch als Dichtungs- und Fugenbänder im Bauwesen. Genannt seien hier z.B. die Abdeckung einer Fuge zwischen dem Rand einer Badewanne und der Badezimmerwand oder die Fuge zwischen Fensterrahmen und Wand beim Einbau eines Fensters. Generell können solche Bänder überall verwendet werden, wo deren Dichtungs- und Dämmfunktion (Wärme- und Schalldämmung) benötigt wird.

Herkömmliche selbstklebende Dichtungs- und Fugenbänder haben den Nachteil, dass sie in an der Produktionsstätte zum voraus im Hinblick auf ihre Anwendung auf dem Bau oder in Industrie und Gewerbe genau auf die verlangte Breite vorgeschnitten werden müssen.

Wenn das selbstklebende Dichtungs- und Fugenband nun zu schmal für die Fuge ist, muss der Rest mit Kitt- oder anderem Fugenmaterial ausgefüllt werden. Das kostet Zeit und Geld.

Wenn das selbstklebende Dichtungs- und Fugenband zu breit ist, muss es entlang der Fuge mit einer Klinge durchtrennt werden. Der überstehende Teil muss dann von Hand mühselig abgekratzt werden. Dabei besteht zudem die Gefahr, dass beim Schneiden die Oberfläche, auf welcher das Band aufgeklebt ist, verletzt wird (z.B. ein Fensterrahmen aus Holz, eine lackierte Oberfläche), was zu Folgeschäden führen kann. Dasselbe gilt auch allgemein für Klebebänder, z.B. für Abdeckbänder.

Der Erfindung liegt deshalb die Aufgabe zugrunde, ein Klebeband, insbesondere ein Dichtungs- und Fugenband zu schaffen, welche diese Nachteile nicht aufweist. Insbesondere soll das Klebeband in Standardgrössen lieferbar und bei der Anwendung einfach auf die gewünschte Breite einstellbar sein. Dabei soll keine Gefahr der Beschädigung empfindlicher Oberflächen bestehen, auf welchen das Band aufgeklebt ist.

Erfindungsgemäss wird dies bei einem Klebeband erreicht durch einen mehrschichtigen Aufbau mit mindestens einer ersten Schicht, mindestens einer mit der ersten Schicht fest verbundenen zweiten Schicht, die beim Reissen derselben, ausgehend von der Anreissstelle, eine bevorzugte Reissrichtung in Bandlängsrichtung aufweist, und mit einer Haftkleberschicht, welche auf der zweiten Schicht aufgebracht ist.

Durch die genannten Merkmale kann das zunächst zu breite Band nach dem Aufkleben auf die gewünschte Breite eingestellt werden, indem der überstehende Teil an einem Bandende angerissen und dann der ganze überstehende Teil abgerissen wird. Dies ist möglich, da die zweite Schicht definiert reisst und die mit ihr fest verbundene erste Schicht entlang derselben Trennungslinie zerreist. Das Band kann so ohne Werkzeug (Messer) auf die gewünschte Breite "zugerissen" werden. Damit entfällt auch die Gefahr eines Einschneidens in die Oberfläche, auf welcher das Band klebt.

Vorzugsweise ist das Band ein Dichtungs- und Fugenband mit einer ersten Schicht aus Schaumstoff.

Vorzugsweise wird die zweite Schicht von einem Gewebe gebildet. Dieses ist so ausgestaltet, dass es entlang eines Kettfadens reisst (d.h. die Schussfäden reissen), wenn am Kettfaden gezogen wird. Dabei bildet zudem der Kettfaden eine "Schneide" zum Schneiden der ersten Schicht, was in dieser eine besonders saubere Trennlinie ergibt. Ferner bildet das Gewebe ein Netz, welches das rückstandsfreie Ablösen des abzureissenden Bandteiles von der Oberfläche begünstigt. Als erste Schicht findet vorzugsweise ein Schaumstoff Verwendung.

Im folgenden werden Ausführungsbeispiele der Erfindung anhand der Zeichnung näher erläutert. Dabei zeigt:
Figur 1 eine nicht massstäbliche Seitenansicht eines Abschnittes des neuerungsgemässen Bandes;
Figur 2 eine Draufsicht auf die Gewebeseite des Bandabschnitts von Figur 1.

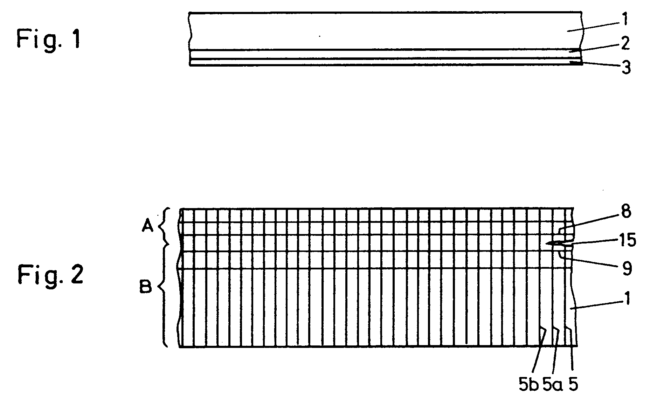

In Figur 1 ist die Seitenansicht eines Bandabschnittes gezeigt, mit einer ersten Schicht 1, die die Dichtungs- und Dämmfunktion erfüllt. Dabei wird ein Schaumstoffmaterial eingesetzt, z.B. aus PE, PUR oder PVC. Solche Materialien sind leicht durchtrennbar. Die Dicke solch einer Schicht 1 kann z.B. 3 mm betragen, sie kann aber in weitem Bereich frei gewählt werden. Die Schicht 2 besteht vorzugsweise aus einem Gewebe, welches eine definierte Reissrichtung aufweist. Gemeint ist dabei, dass das Gewebe entlang jeweils einer von einer Vielzahl paralleler Reisslinien reisst, wobei das Reissen entlang jener Reisslinie erfolgt, die am nächsten der Anreissstelle liegt, an welcher das Reissen beginnt.

Bei einem Gewebe ist eine solche Funktion auf bekannte Weise beim Weben herstellbar. In Figur 2, welche eine Draufsicht auf die Gewebeseite des Bandes mit einem nur schematisch dargestellten Gewebe zeigt, wobei insbesondere nur wenige Kettfäden gezeigt sind, liegt die Anreissstelle 15 beim Schussfaden 5. Wird der in Figur 2 oberhalb der Anreissstelle liegende Bandteil nun von Hand abgerissen, so erfolgt das Reissen des Bandes entlang des Kettfadens 8, d.h. die Schussfäden 5a, 5b, 5c usw. reissen nacheinander zwischen den Kettfäden 8 und 9. Der weggerissene Gewebeteil, bzw. dessen Kettfaden 8, durchtrennt dabei sauber die mit dem Gewebe 2 verbundene Schaumstoffschicht 1 entlang der Reisslinie (in der vergröberten Darstellung von Figur 2 mit "grobem" Gewebe ist dies indes nicht gut ersichtlich). Die beiden Schichten 1 und 2 sind fest miteinander verbunden, sei es durch einen (nicht dargestellten) Haftkleber oder eine thermische und/oder chemische Verschweissung der Schichten 1 und 2.

Mit 3 ist eine an sich bekannte Haftkleberschicht gezeigt, die das Aufkleben des Bandes am Verwendungsart gestattet. Es kann sich dabei z.B. um eine Acryldispersion oder um eine Heissschmelzkleberschicht (Hotmelt) handeln.

Vor dem Gebrauch des Bandes ist die Schicht 3 in der Regel mit einem Schutzpapier oder einer Schutzfolie abgedeckt. Nach dem Aufkleben des Bandes wird der überstehende Teil (z.B. der in Figur 2 mit A bezeichnete Teil) entfernt, indem an der gewünschten Stelle (in Figur 2 an der Anreissstelle 15) das Band angerissen und dann der überstehende Teil (A) abgerissen wird. Das Band reisst definiert entlang einer (in der Regel bandkantenparallel) gewählten Reisslinie (in Figur 2 entlang des Kettfadens 8). Der Bandteil B verbleibt in gewünschter Breite auf der Oberfläche. Der Bandteil A lässt sich von der beklebten Oberfläche ohne Rückstände der Schicht 1 entfernen, weil die Schicht 2 bei Zug die Schicht 1 wie in einem Netz mitzieht.

Der Haftkleber 3 muss so eingestellt sein, dass die Kohäsion von Schicht 2 und Haftkleber grösser ist als die Adhäsion vom Kleber zur Oberfläche, so dass sich die Schicht 2 von der Oberfläche leicht ablösen lässt.

Das Gewebe 2 kann z.B. als Gewebe mit einem Verhältnis von Kette zu Schuss von 30/4 bis 15/12 gewählt werden. Möglich sind auch andere Schichten 2, z.B. ein Papier mit eingelegten Längsfäden, welche die Reisslinie definieren oder ein Papier oder eine Folie mit Schwächungslinien (z.B. Perforationen), welche die Reisslinien definieren.

Obwohl das dargestellte Beispiel ein Dichtungs- und Fugenband beschreibt, ist es klar, dass die Neuerung auch bei allgemein verwendbaren Klebebändern vorteilhaft ist. So z.B. für Abdeckbänder für Malerarbeiten. Die erste Schicht besteht dabei z.B. aus Papier, die zweite Schicht z.B. ebenfalls aus Papier mit Längsfäden oder aus einem Gewebe. In jedem Fall muss die erste Schicht so ausgeführt sein, dass sie beim Reissen durch die in bevorzugter Richtung reissende zweite Schicht sauber mitgetrennt wird.

## Patentansprüche

1. Klebeband, gekennzeichnet durch einen mehrschichtigen Aufbau mit mindestens einer ersten Schicht (1), mindestens einer mit der ersten Schicht fest verbundenen zweiten Schicht (2), die beim Reissen derselben, ausgehend von der Anreissstelle, eine bevorzugte Reissrichtung in Bandlängsrichtung aufweist, und mit einer Haftkleberschicht (3), welche auf der zweiten Schicht (2) aufgebracht ist.

2. Klebeband nach Anspruch 1, dadurch gekennzeichnet, dass es als Dichtungs- und Fugenband mit einer ersten Schicht (1) als Dichtungs- und Dämmschicht, die aus einem Schaumstoffmaterial besteht, ausgebildet ist.

3. Klebeband nach Anspruch 2, dadurch gekennzeichnet, dass ein Schaumstoffmaterial aus Polyäthylen oder Polyurethan oder Polyvinylchlorid verwendet wird.

4. Klebeband nach einem der Ansprüche 1-3, dadurch gekennzeichnet, dass die zweite Schicht (2) von einem Gewebe gebildet wird.

5. Klebeband nach Anspruch 4, dadurch gekennzeichnet, dass das Verhältnis Kette/Schuss 30/4 bis 15/12 beträgt.

6. Klebeband nach einem der vorangehenden Ansprüche, dadurch gekennzeichnet, dass die erste und die zweite Schicht mittels eines Haftklebers verbunden sind.

7. Klebeband nach einem der Ansprüche 1 bis 5, dadurch gekennzeichnet, dass die erste und die zweite Schicht verschweisst sind.

8. Klebeband nach einem der Ansprüche 1-7, dadurch gekennzeichnet, dass die Haftkleberschicht von einer Acryldispersion gebildet wird.

9. Klebeband nach einem der Ansprüche 1-7, dadurch gekennzeichnet, dass die Haftkleberschicht von einer Heissschmelzkleberschicht gebildet wird.

10. Klebeband nach einem der vorangehenden Ansprüche, dadurch gekennzeichnet, dass die Haftkleberschicht mit einem Schutzpapier oder einer Schutzfolie versehen ist.
